# EUROPEAN PATENT SPECIFICATION

(11) **EP 4 136 349 B1**
(45) Date of publication and mention of the grant of the patent: **03.01.2024**
(21) Application number: 21728047.8
(22) Date of filing: 21.05.2021
(51) Int. Cl.: F03D 80/50

(54) **REPAIR SYSTEM AND METHOD FOR PERFORMING AT LEAST ONE REPAIR TASK IN A WIND TURBINE**
REPARATURSYSTEM UND VERFAHREN ZUR DURCHFÜHRUNG MINDESTENS EINER REPARATURAUFGABE IN EINER WINDENERGIEANLAGE
SYSTÈME DE RÉPARATION ET PROCÉDÉ DE RÉALISATION D'AU MOINS UNE TÂCHE DE RÉPARATION DANS UNE ÉOLIENNE

(30) Priority: 12.06.2020 EP 20179807
(43) Date of publication of application: 22.02.2023
(73) Proprietor: Siemens Gamesa Renewable Energy GmbH & Co. KG, 20097 Hamburg (DE)
(72) Inventor: GOLLNICK, Bert, 22145 Hamburg (DE)
(74) Representative: SGRE-Association
(86) International application number: PCT/EP2021/063637
(87) International publication number: WO 2021/249745

(56) References cited:
- KR-B1- 101 236 763
- US-A1- 2012 165 985
- US-A1- 2019 202 053

## Description

The invention concerns a repair system for performing at least one repair task in the nacelle of at least one wind turbine. The invention also concerns a method for performing at least one repair task in a nacelle of at least one wind turbine using a repair system. One example of a repair system for a wind turbine is disclosed in US2019202053 A1.

Wind turbines are large-scale electrical power generation devices, which are often placed away from infrastructure, for example in the case of offshore wind parks, which may comprise a large number of such wind turbines positioned in the sea. Wind turbines usually comprise a tower carrying a nacelle, to which a rotor arrangement having, for example, a rotor hub and at least two, preferably three, wind turbine blades are mounted. In a direct drive wind turbine, the rotor arrangement directly drives a generator of a power generation arrangement housed in the nacelle, while in other cases, a gear box may be used between rotor bearing and generator. The power generation arrangement of a wind turbine may additionally comprise at least one converter for preparing generated electrical power for feeding into a power grid. The nacelle may additionally comprise a controller or control unit of the wind turbine, controlling its operation.

Wind turbines are subject to large forces, associated effects like vibrations, and high power, such that, in addition to regular maintenance tasks, wear effects and other fault conditions may occur, wherein, in many cases, the wind turbine operation needs to be stopped. Operation of the wind turbine is then suspended until a service technician was informed, planned a trip, made the trip to the wind turbine and performed the required repair tasks. In particular in the case of offshore wind turbines, weather is an important factor determining when the wind turbine may resume operation, since a trip to the wind turbine may only be undertaken if weather allows it. That is, the overall time until the wind turbine may again be put into operation, and thus the loss in power generation due to the malfunction, is dominated by the time the technician needs to travel to the wind turbine, wherein the pure repair time is usually negligible in comparison. In summary, even small technical malfunctions in a wind turbine may result in a long downtime and thus losses in power generation and high cost.

It is an object of the current invention to provide for faster execution of repair tasks in wind turbines, in particular offshore wind turbines.

This object is achieved by providing a repair system according to claim 1 and a method according to claim 11. Advantageous embodiments are described in the dependent claims.

A repair system for performing at least one repair task in at least one wind turbine, in particular the nacelle, according to the invention comprises:
a controllable robotic repair device installed in the wind turbine, in particular the nacelle, an operating device for remotely operating the robotic repair device, which comprises a control device and virtual reality equipment providing a virtual reality environment of the interior of the wind turbine, in particular the nacelle, for at least one human service user provided remote to the wind turbine, wherein the control device of the operating device is adapted
to remotely control the robotic repair device, in particular as an avatar, according to user input commands provided via the virtual reality equipment,
to determine, based on status information received from a wind turbine controller and/or sensor data of the at least one environment sensor, and/or receive repair task information describing a current repair task, and
to, in the virtual reality environment, highlight objects of the interior, in particular the nacelle, relevant for the repair task according to the repair task information and/or fade objects not relevant for the repair task according to the repair task information.

While the invention will be described as relating to the interior of the nacelle of the wind turbine as the most relevant use case, it is noted that it is also applicable to other interior areas of the wind turbine, for example inside the tower, in particular in an equipment room or on a platform of the tower.

The invention provides an option for a human service user, in particular a service technician, to repair the wind turbine remotely, without the necessity to physically enter the wind turbine. In particular, the service technician, that is, the human service user, may use virtual reality to operate equipment, comprising at least a robotic repair device, that is installed in the interior, in particular in the nacelle of the wind turbine. The robotic repair device may be understood as an avatar which is operated using a virtual reality environment. Access to the virtual reality environment is provided by virtual reality equipment provided remote to the wind turbine, for example at a workplace of the human service user. A control device receives user input commands generated by the virtual reality equipment to generate respective control signals for the robotic repair device in the wind turbine. That is, a communication link between the workplace of the user and the wind turbine, in particular the robotic repair device, is used, which preferably allows for wireless communication. The control device may be distributed. That is, different sub-systems of the control device may be located at different locations. However, in some embodiments, the control device may also be implemented as or comprise a central server device, in particular when the repair system comprises multiple robotic repair devices located in different wind turbines and/or multiple sets of virtual reality equipment, such that, in particular, multiple repair tasks in different wind turbines may, in particular simultaneously, be performed using the repair system according to the invention.

Generally speaking, the repair system according to the invention may thus comprise multiple robotic repair devices in multiple wind turbines, for example in all wind turbines of at least one wind park, and/or multiple sets of virtual reality equipment. In this manner, even large-scale wind parks may be serviced by using one repair system, in particular by coupling a certain set of virtual reality equipment to the robotic repair device of a certain wind turbine. Maintenance and repair may thus be provided remotely without the need for expensive and effortful time-consuming travel activities by the service technician.

Using the repair system according to the invention may thus lead to reduced downtimes, reduced manual effort of service technicians and thus reduced cost, to higher availability of wind turbines and decreased levelized cost of electricity.

As should be noted, while the invention focuses on unplanned maintenance/repair tasks which might lead to downtimes of the wind turbine, the repair system is, of course, also applicable to regular, planned maintenance and/or repair tasks.

A process using the repair system according to the invention may be as follows. First of all, a fault condition, in particular a malfunction, occurs at a wind turbine, in particular causing a downtime or at least reduction in power generation. Data analysis, in particular based on alarm and/or status information of the wind turbine reveals that a certain repair task is required. Once the repair task to be performed is determined, the repair system according to the invention may be put into operation. A service technician as the human service user uses the virtual reality equipment to virtually enter the wind turbine, in particular its nacelle, implemented as the virtual reality environment. The service technician operates the robotic repair device via user input commands generated in the virtual reality environment using the virtual reality equipment. In other words, the service technician operates an avatar that performs physical actions inside the wind turbine. As soon as the repair task has been performed in this manner, the wind turbine may, if applicable, again be put into operation and/or have its power generation increased.

It is noted that not necessarily all repair tasks may be performed remotely, for example regarding repair tasks requiring the replacement of a larger component, for example the converter, the generator or the like. In this case, the repair system is, of course, only used for repair tasks it is configured to perform, however, preparatory steps for on-site repair tasks may, at least in some cases, also be performed using the repair system according to the invention.

In preferred embodiments, the repair system may also comprise at least one tool for repair, in particular as part of the robotic repair device or usable by the robotic repair device. For example, some tools, for example pincers, screw drivers and the like may be implemented as a constructive part of the robotic repair device, while other tools, in particular larger tools that are required less often may be stored on-site in the wind turbine, in particular its nacelle, such that they may be picked up and used by the robotic repair device.

The repair system may also comprise spare parts, in particular regarding smaller components or sub-components of the wind turbine such as screws, bolts, connectors, cables and the like. In this manner, when an easily replaceable component and/or sub-component is broken, damaged, or faulty, it may simply be replaced by the robotic repair device using the spare part provided on-site the wind turbine.

As already laid out above, for the remote service technician, the repair system according to the invention provides a set of virtual reality equipment. In preferred embodiments of the invention, the robotic repair system may comprise at least one environment sensor, in particular a camera, and the virtual reality equipment may comprise virtual reality glasses, wherein the control device is adapted to generate the virtual reality environment for the virtual reality glasses based on sensor data from the at least one sensor of the robotic repair device. That is, the virtual reality equipment may comprise virtual reality glasses, in particular a virtual reality headset, as for example known under the trademark "Oculus Quest", available from Facebook Technologies, LLC. Environment sensors on-site, in particular directly coupled to an actuator of the robotic repair device, provide current information regarding the state of the wind turbine components and/or the robotic repair device and can, as in principle known from other applications in the state of the art, be used to produce a virtual reality environment reflecting the current state on-site. Further preferably, the virtual reality equipment may comprise virtual reality gloves, wherein the control device is adapted to derive at least one user input command from movement data of the virtual reality gloves. In many cases, such virtual reality gloves already come as a set with virtual reality glasses, in particular a virtual reality head-set. However, user input commands may also be derived from the virtual reality glasses, as, in a preferred embodiment, the virtual reality glasses may comprise at least one user monitoring sensor and the control device may be configured to adapt a representation of the virtual reality environment based on sensor data from the user monitoring sensor and/or to derive at least one user input command from sensor data of the user monitoring sensor. For example, a user monitoring sensor of the virtual reality glasses may comprise an eye sensor to determine a viewing direction of the user and/or blinking movements of the user. The at least one user monitoring sensor may also comprise at least one inertial sensor and/or acceleration sensor, in particular an inertial platform, for detecting head movements of the user, in particular, the service technician. The displayed representation of the virtual reality environment may be adapted based on such information, but sensor data from the user monitoring sensors may also be used to derive user input commands. For example, a user may fixate a certain position in the virtual reality environment with his gaze and may perform a certain blinking gesture, for example blinking two times in succession, to interact with the position. Such interaction concepts have already been proposed in the state of the art for other applications and will not be described further in this application. Regarding gloves for virtual reality equipment, it is exemplarily referred to an article by K. Song et al., "Pneumatic actuator and flexible piezoelectric sensor for soft virtual reality glove system", Scientific Reports 9 (2019) 8988.

It is again noted that, preferably, the virtual reality environment may be a representation of the interior of the nacelle, where the robotic repair device is installed.

As already discussed, a repair task needs to be determined before it can be performed. In this context, the control device may be adapted to determine, based on status information, in particular comprising alarm information, received from a wind turbine controller and/or sensor data of the at least one environment sensor repair task information describing a current repair task. In such an embodiment, repair task information may be determined by the control device itself. However, additionally or alternatively, the control device may also be adapted to receive repair task information, for example from a higher-level monitoring device or system. In other cases, of course, repair task information may also be input manually. Of course, repair task information may be validated and/or refined by the human service user via the virtual reality equipment.

According to the invention, the control device is be adapted to, in the virtual reality environment, highlight objects of the nacelle relevant for the repair task according to the repair task information and/or fade objects not relevant for the repair task according to the repair task information. In other words, objects like tools to use in the repair tasks, components and/or sub-components to repair and/or parts affected by the repair task may be highlighted in the virtual reality environment, for example, by using a different color than their natural color, adding a luminescence effect and/or increasing brightness.

On the other hand, objects that are not relevant to the repair tasks can be faded, that is, in effect, "counter-highlighted", in the virtual reality environment, for example by changing their natural colors to grey tones according to a grey scale and/or blurring their outlines. This facilitates work for the service technician in the virtual reality environment, guiding him to objects relevant and required for the current repair task.

Further preferably, the control device may be adapted to include virtual help and/or status information objects into the virtual reality environment according to the repair task information and/or the status information. For example, if a repair task is related to overheating, current temperature values of a temperature sensor of the wind turbine, which have been received by the control device, may be displayed, and/or the corresponding component or sub-component of the wind turbine may be colored in a corresponding red tone. Additionally, or alternatively to such display of status information, the repair task information may also be used to guide the user through the repair tasks, for example by including arrows, textural information and/or pictogram information as objects into the virtual reality environment, simplifying the performance of the repair task. In this manner, the repair task may be performed fast and reliably.

Regarding the robotic repair system, in preferred embodiments, the robotic repair device may comprise at least one manipulator, in particular comprising at least one tool and/or adapted to handle a tool provided in the nacelle. In particular, the manipulator may be a grappler and/or a robot arm. In an envisaged embodiment, the robotic repair device may be or comprise a humanoid robot. As, however, such humanoid robots are difficult to technically implement, other solutions at least partly resembling human perception and/or activity range may be implemented in the robotic repair device, since converting user input commands, in particular also comprising movements of the user, to control signals for the robotic repair device is strongly simplified. For example, in a preferred embodiment, if the robotic repair device also comprises at least one environment sensor, in particular a camera, as described above, the at least one environment sensor and the at least one manipulator may be arranged in a human eye-to-arm relationship.

In this manner, the at least one manipulator may be intuitively understood as a replacement for an arm of the service technician and may, for example, also be depicted as an arm in the virtual reality environment. In other words, the at least one environment sensor may act as a replacement for an eye of the user, while the at least one manipulator may act as a replacement for an arm of the user.

Preferably, the robotic repair device may further comprise a positioning assembly for positioning the manipulator. For example, the manipulator and, in particular, additionally the at least one environment sensor, may be mounted on a steerable and/or at least partly autonomous mobile platform, for example positioned on the floor of the nacelle.

However, since the nacelle may be subject to vibrations and/or other movements, which may decrease the accuracy of actions performed using the manipulator, guidance systems that are fixed to the wind turbine, in particular the nacelle itself, are preferred.

In a preferred embodiment, the positioning assembly may comprise a first guiding device, in particular guide rail, and a second guiding device, in particular guide rail, wherein the second guiding device is guided in the first guiding device in a first direction and the manipulator is guided in the second device in a second direction, which is in particular perpendicular to the first direction. Each guiding device may comprise actuators, in particular motors, controllable by the control device to adjust to a certain position and/or perform a movement, each defined by corresponding user input commands, of the manipulator. Using perpendicular linear guides, in particular guiding rails, allows for movement and positioning to any position in a two-dimensional coordinate system spanned by the first and the second direction. In especially preferred embodiments, such a positioning assembly may be supplemented by a height adjustment device, for example a telescope-like height adjustment device coupling the manipulator to the second guiding device, in particular guide rail. In this manner, the manipulator can be positioned in any three-dimensional location covered by the positioning ranges of each positioning assembly component. In particular for coupling the manipulator to the height adjustment device, a gimbal assembly having a corresponding actuator may also be provided to provide multiple orientations of the manipulator. Of course, other joints, for example of an robotic arm as or as part of the manipulator, may also be provided.

Preferably, the first direction may correspond to a longitudinal direction of the nacelle and/or the direction of the rotational axis of the wind turbine rotating assembly, and/or the first guiding device may be mounted to the ceiling of the nacelle. This facilitates integrating the positioning assembly into the nacelle, which usually is longitudinal, such that, in the corresponding longitudinal direction which often corresponds to the rotational axis, multiple components and/or sub-components follow each other.

In particularly preferred embodiments, the positioning range of the positioning system, in particular the first guiding device, may span at least partly a rotor bearing and/or a gear box and/or a power generation assembly, in particular a generator, in the nacelle. In this manner, each major component in the nacelle is accessible for repair tasks by the manipulator.

The invention further concerns a method for performing at least one repair task in at least one wind turbine, in particular a nacelle, using a repair system according to the invention, the repair system comprising a controllable robotic repair device installed in the wind turbine, in particular the nacelle, and an operating device for remotely operating the robotic repair device, which comprises a control device and virtual reality equipment providing a virtual reality environment of the interior of the wind turbine, in particular the nacelle, for at least one human service user, wherein the virtual reality equipment is provided remote to the wind turbine,
wherein the robotic repair device is remotely controlled according to user input commands provided via the virtual reality equipment,
wherein repair task information describing a current repair task is determined based on status information received from a wind turbine controller (12) and/or sensor data of at least one environment sensor (22) of the robotic repair device (15) and/or received, and
wherein, in the virtual reality environment, objects of the interior, in particular the nacelle (5), relevant for the repair task according to the repair task information are highlighted and/or objects not relevant for the repair task according to the repair task information are faded.

All comments and features regarding the repair system according to the invention correspondingly apply to the method according to the invention, such that the same advantages are achieved.

Preferably, in a method according to the invention, protocol information describing each repair task is stored, in particular in the control device, the protocol information in particular comprising a repaired component of the wind turbine, used tools and/or processing steps to perform the repair according to user input commands. In this manner, each repair task can be reconstructed at a later time, for example for review, quality management and the like. The protocol information may be stored in the control device or in another storage device, in particular in a database, for later evaluation/use. However, in especially preferred embodiments of the current invention, such protocol information, in particular from repair tasks in different wind turbines and/or performed by different service technicians as human service users, may be used as training data for machine learning an artificial intelligence algorithm to, after sufficient training, autonomously perform at least a part of the repair tasks.

That is, in such especially preferred embodiments, stored protocol information for multiple repair tasks may be used to train an artificial intelligence automatic control algorithm, wherein the trained automatic control algorithm is used for fully automatic performance of at least one future repair task by, in particular remotely, controlling the robotic repair device. In concrete embodiments, the automatic control algorithm may comprise a neural network and/or training may be performed as reinforcement learning. That is, the automatic control algorithm learns how to operate the robotic repair device to perform repairs. If the trained automatic control algorithm is applied in the control device, repair tasks may be performed fully automatically using the robotic repair device. In such embodiments, the way towards an autonomous wind turbine is paved, in which the robotic repair device, which may be understood as an avatar, is not controlled by a human service technician, but can perform repair tasks (or other service tasks) autonomously.

In general, an artificial intelligence algorithm, which may also be called trained function or machine learned algorithm, mimics cognitive functions that humans associate with other human minds. In particular, by training based on training data, in this embodiment protocol information, the artificial intelligence algorithm is able to adapt to new circumstances and to detect and extrapolate patterns. In general, parameters of an artificial intelligence algorithm can be adapted by means of training. While, in principle, known learning techniques (training techniques), such as supervised learning, semi-supervised learning, and/or unsupervised learning can be used. Reinforcement learning is especially preferred. Furthermore, representation learning (an alternative term is "feature learning") can be used. In particular, the parameters of the artificial intelligence algorithm can be adapted iteratively by several steps of training.

An artificial intelligence algorithm, in this case the automatic control algorithm, can comprise a neural network, a support vector machine, a decision tree and/or a Bayesian network, and/or the artificial intelligence algorithm can be based on K-means clustering, Q-learning, genetic algorithms and/or association rules. Of course, other algorithms or algorithm classes may also be used. In particular, a neural network, which is usually a deep neural network, may, for example, be a convolutional neural network or a recurrent neural network. Furthermore, a neural network can be a generative adversarial network.

Other objects and features of the present invention will become apparent from the following detailed description considered in conjunction with the accompanying drawings. The drawings, however, are only principle sketches designed solely for the purpose of illustration and do not limit the invention. The drawings show:
- Fig. 1: a principle drawing of a repair system according to the invention implemented for a wind turbine,
- Fig. 2: a view of a robotic repair device installed in the nacelle of the wind turbine and
- Fig. 3: a flowchart describing an embodiment of a method according to the invention.

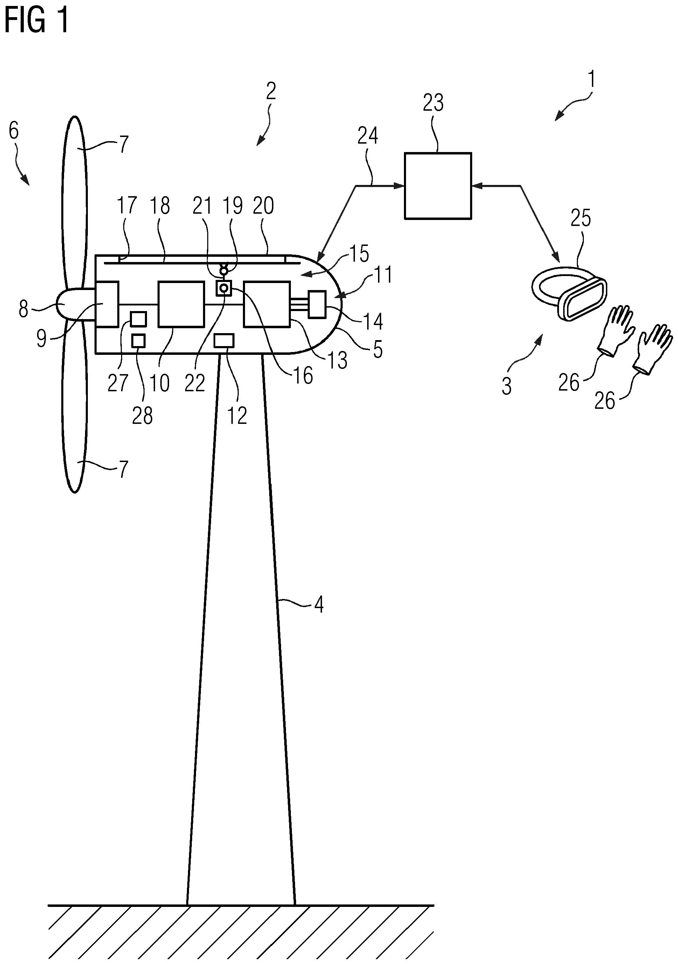

Fig. 1 shows a repair system 1 implemented for a wind turbine 2. It is, however, noted already at this point, that in preferred embodiments, the repair system 1 is provided for multiple wind turbines 2. Additionally, the repair system may comprise multiple sets of virtual reality equipment 3 such that multiple repair tasks may be performed simultaneously by multiple human service users, in particular service technicians.

As can be seen, the wind turbine 2 comprises a tower 4 on which a nacelle 5 is rotatably mounted. A rotating assembly 6 comprising three wind turbine blades 7 and a rotor hub 8 is mounted on the nacelle 5. In the nacelle 5, a rotor bearing 9, a gear box 10, and a power generation assembly 11 are housed, as well as a controller 12 of the wind turbine 2. The power generation assembly 11, in this embodiment, comprises a generator 13 and at least one converter 14.

To be able to perform repair tasks in the nacelle 5 of the wind turbine 2, the repair system 1 comprises a robotic repair device 15 installed inside the nacelle 5, in this case comprising at least one manipulator 16 only indicated in fig. 1 and a positioning assembly 17 for positioning the manipulator 16 inside the nacelle 5.

The positioning assembly 17 comprises a first guiding device 18, in this case a guard rail extending in a first direction, which is the longitudinal direction of the nacelle 5 and thus the direction of the rotating axis of the rotating assembly 6. The guard rail spans at least part of the rotor bearing 9, the gear box 10, the generator 13 and, at least on part, the at least one converter 14 such that a second guiding device 19 guided in the first guiding device 18 can be positioned above each of those components, since, in this case, the positioning assembly 17 is mounted to the ceiling 20 of the nacelle 5. The second guiding device 19 is also a guide rail extending in a second horizontal direction perpendicular to the first direction, thus perpendicular to the longitudinal direction of the nacelle 5. The manipulator 16 is coupled to the second guiding device 19 by a height adjustment device 21, in this case a telescope arm which is perpendicular to the first and second guiding devices. In this manner, the manipulator 16 can be positioned anywhere in the three-dimensional space of the nacelle 5 allowed by the positioning ranges of the components of the positioning assembly 17, that is, the first guiding device 18, the second guiding device 19 and the height adjustment device 21. Each of these components of the positioning assembly 17 comprises at least one controllable actuator, as does the manipulator 16, which may be or comprise a robotic arm or a grabbler. The robotic repair device 15 further comprises at least one environment sensor 22, in this case at least one camera, in particular a 3D-camera, mounted on the manipulator 16 or the height adjustment device 21. It is noted that the controller 12 of the wind turbine 2 might also be connected to further sensors and/or control units in the wind turbine 2, which are not shown for simplicity reasons, which provide status information or, for example comprising alarm information, regarding the wind turbine 2, in particular the components and sub-components housed in the nacelle 5.

The repair system 1 further comprises a control device 23. The control device 23 is adapted to receive sensor data of the at least one environment sensor 22 and to control the robotic repair device 15 by sending corresponding control signals using a wireless communication link 24. The control device 23 also provides a virtual reality environment of the interior of the nacelle 5 for the already mentioned at least one set of virtual reality equipment 3 and is adapted to derive user input commands from user data received from the virtual reality equipment 3. In the embodiment of fig. 1, each set of virtual reality equipment 3 comprises virtual reality glasses 25 as well as virtual reality gloves 26. As in principle known from the state of the art, the virtual reality glasses 25 comprise at least one user monitoring sensor, wherein the control device 23 is adapted to adapt a representation of the virtual reality environment based on sensor data from the user monitoring sensor and to derive user input commands from sensor data of the user monitoring sensor. For example, interaction with objects of the virtual reality environment may be implemented by fixating objects with the gaze of the human service user and performing predefined blinking movements and/or eye movements by the user. Furthermore, of course, user input commands can also be derived from movement data of the virtual reality gloves 26.

The control device 23 may be configured to determine repair task information concerning a current repair task by itself, in particular by evaluating status information received from the controller 12 and/or sensor data received from the at least one environment sensor 22. Status information from the controller 12 may, of course, also comprise alarm information if a fault condition, in particular a malfunction, has been detected by the controller 12. Using such information, the control device 23 may derive a repair task to be performed and compiles respective repair task information. Alternatively or additionally, repair task information may also be received by the control device 23, for example from the controller 12 or a higher-level device.

If it was determined that the wind turbine 2 needs repair by performing a corresponding repair task, a human service user, in particular a service technician, is contacted and may use the virtual reality equipment 3 to act in the virtual reality environment 23 generated by the control device 23 and resembling the interior of the nacelle 5. The virtual reality environment depicts, using the virtual reality glasses 25, the current state of the interior of the nacelle 5, in particular based on the sensor data of the camera as environment sensor 22 and/or status information from the controller 12. However, the virtual reality environment is enriched with additional information or help by the control device 23 based on the repair task information. In particular, objects relevant for the repair task may be highlighted, for example by representing them in signal colors instead of the natural colors in the virtual reality environment or increasing their brightness. On the other hand, objects not relevant for the repair task may be faded out, for example represented blurred and/or in grey scale colors. Further, the control device 23 adds virtual help information objects and virtual status information objects, for example showing the temperature of certain components and/or sub-components and providing hints on performing the repair task, for example by arrow objects. In particular regarding status information objects, of course, also status information received from the controller 12 may be used directly.

While the service technician performs the repair task by generating corresponding user input commands resulting in control signals for the robotic repair device 15, protocol data describing the execution of the repair task is collected. It is noted that, for performing the repair task, tools 27 and/or spare parts 28 located in the nacelle 5, in particular as part of the repair system 1, may be used. Tools 27 may be integrated into the manipulator 16 or picked up and handled by the manipulator 16. Protocol information may, in particular, comprise the component or sub-component to be repaired, tools used and processing steps to perform the repair task.

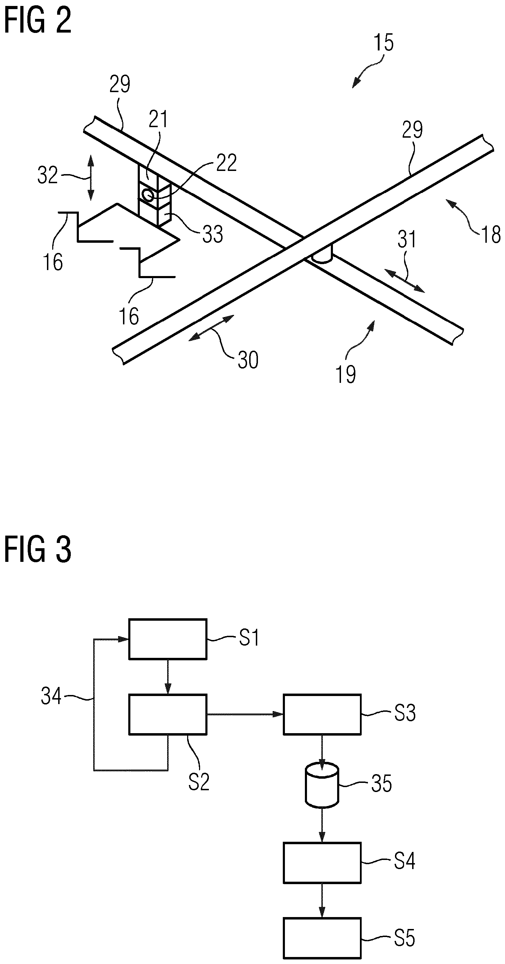

Fig. 2 shows an exemplary concrete embodiment of the robotic repair device 15 as a schematical drawing. In this embodiment, both the first guiding device 18 as well as the second guiding device 19 of the positioning assembly 17 are realized as guide rails 29 in perpendicular first and second directions 30, 31. The height adjustment device 21 is mounted to a sled of the guide rail 29 of the second guiding device 19, such that the, in this case two, manipulators 16, which may be grabblers or robotic arms, may also be adjusted in a height direction 32. In this case, the environment sensor 22 implemented as a camera is positioned above the manipulators 16 in a human eye-to-arm relationship. This allows for intuitive input of user input commands by the service technician and simplifies conversion of user input commands to respective control signals.

It is noted that, in this embodiment, the positioning assembly 17 further comprises a gimbal assembly 33 having a corresponding actuator, such that the environment sensor 22 and/or the manipulator 16 may be brought into different orientations, in particular according to user monitoring data and/or movement data from the virtual reality equipment 3. Of course, additionally or alternatively, each manipulator 16 may also comprise at least one joint.

Fig. 3 finally shows a flowchart of a preferred embodiment of a method according to the invention. In a step S1, repair task information concerning at least one repair task in at least one wind turbine 2 is determined and/or received, as explained above. In a step S2, a human service user, in this case a service technician, performs the repair task based on the repair task information and uses the repair system 1, in particular the virtual reality equipment 3. The execution of this repair task, performed in step S2, is protocolled in a parallel step S3. Protocol information, comprising at least the component repaired, the tools used and the process steps performed/initiated by the service technician in step S2, is stored. Preferably, all repair task information determined and/received in step S1 may be included into the protocol information data set of a repair task. Since, as indicated by arrow 34, multiple repair tasks are performed over time, a database 35 containing a large number of protocol information data sets is generated.

These protocol information data sets can, once sufficient data has been acquired, in particular for a certain class of repair tasks, be used, in a step S4, to train an artificial intelligence automatic control algorithm to completely automatically perform repair tasks, in particular of the class of repair tasks to which the protocol information used as training data is related. Once the automatic control algorithm has been sufficiently trained in step S4, such that it can robustly perform repair tasks, at least of the repair task class, it may be employed in the control device 23 to automatically perform at least some of the repair tasks.

Although the present invention has been described in detail with reference to the preferred embodiment, the present invention is not limited by the disclosed examples from which the skilled person is able to derive other variations without departing from the scope of the invention.

## Claims

1. A repair system (1) for performing at least one repair task in at least one wind turbine (2), in particular the nacelle (5), the repair system (1) comprising a controllable robotic repair device (15) installed in the wind turbine (2), in particular in the nacelle (5), and having at least one environment sensor (22), the repair system (1) further comprising an operating device for remotely operating the robotic repair device (15), the operating device comprising
a control device (23), and
a virtual reality equipment (3) providing a virtual reality environment of an interior of the wind turbine (2), in particular of the nacelle (5), for at least one human service user provided remote to the wind turbine (2), wherein the control device (23) of the operating device is adapted
to remotely control the robotic repair device (15), in particular as an avatar, according to user input commands provided via the virtual reality equipment (3),
to determine, based on status information received from a wind turbine controller (12) and/or sensor data of the at least one environment sensor (22), and/or to receive repair task information describing a current repair task, and
to, in the virtual reality environment, highlight objects of the interior, in particular of the nacelle (5), relevant for the repair task according to the repair task information, and/or fade objects not relevant for the repair task according to the repair task information.

2. The repair system (1) according to claim 1,
wherein the virtual reality equipment (3) comprises virtual reality glasses (25), and
wherein the control device (23) is adapted to generate the virtual reality environment for the virtual reality glasses (25) based on sensor data from the at least one sensor of the robotic repair device (15), and/or
wherein the virtual reality equipment (3) further comprises virtual reality gloves (26), and
wherein the control device (23) is adapted to derive at least one user input command from movement data of the virtual reality gloves (26).

3. The repair system (1) according to one of the preceding claims, wherein the control device (23) is adapted to include virtual help and/or status information objects into the virtual reality environment according to the repair task information and/or the status information.

4. The repair system (1) according to one of the preceding claims, wherein the robotic repair device (15) comprises at least one manipulator (16), in particular comprising at least one tool and/or adapted to handle a tool provided in the interior, in particular the nacelle (5).

5. The repair system (1) according to claim 4, wherein the at least one environment sensor (22) and the at least one manipulator (16) are arranged in a human eye-to-arm relationship.

6. The repair system (1) according to claim 4 or 5, wherein the robotic repair device (15) further comprises a positioning assembly (17) for positioning the manipulator (16).

7. The repair system (1) according to claim 6, wherein the positioning assembly (17) comprises a first guiding device (18), in particular guide rail (29), and a second guiding device (19), in particular guide rail (29), wherein the second guiding device (19) is guided in the first guiding device (18) in a first direction (30) and the manipulator (16) is guided in the second guiding device (19) in a second direction (31), in particular which is perpendicular to the first direction (30).

8. The repair system (1) according to claim 7, wherein the first direction (30) corresponds to a longitudinal direction of the nacelle (5) and/or the direction of the rotational axis of the wind turbine rotating assembly (6), and/or the first guiding device (19) is mounted to a ceiling (20) of the nacelle (5).

9. The repair system (1) according to any of claims 6 to 8, wherein the positioning range of the positioning assembly (17), in particular the first guiding device (18), spans at least partly a rotor bearing (9) and/or a gearbox (10) and/or a power generation assembly (11), in particular a generator (13), in the nacelle (5).

10. The repair system (1) according to one of the preceding claims, comprising the nacelle (5) of the wind turbine (2), wherein the controllable robotic repair device (15) is installed in the nacelle (5).

11. A method for performing at least one repair task in at least one wind turbine (2), in particular the nacelle (5), using a repair system (1) according to one of the preceding claims, the repair system (1) comprising a controllable robotic repair device (15) installed in the wind turbine, in particular the nacelle (5), an operating device for remotely operating the robotic repair device (15), which comprises a control device (23) and virtual reality equipment (3) providing a virtual reality environment of the interior of the wind turbine, in particular the nacelle (5), for at least one human service user provided remote to the wind turbine (2),
wherein the robotic repair device (15) is remotely controlled according to user input commands provided via the virtual reality equipment (3),
wherein repair task information describing a current repair task is determined based on status information received from a wind turbine controller (12) and/or sensor data of at least one environment sensor (22) of the robotic repair device (15) and/or received, and
wherein, in the virtual reality environment, objects of an interior, in particular of the nacelle (5), relevant for the repair task according to the repair task information are highlighted and/or objects not relevant for the repair task according to the repair task information are faded.

12. The method according to claim 11, wherein protocol information describing each repair task is stored, in particular in the control device (23), the protocol information in particular comprising a repaired component of the wind turbine (2), used tools (27) and/or processing steps to perform the repair according to user input commands.

13. The method according to claim 12, wherein stored protocol information for multiple repair tasks is used to train an artificial intelligence automatic control algorithm, wherein the trained automatic control algorithm is used for fully automatic performance of at least one future repair task by, in particular remotely, controlling the robotic repair device (15).

14. The method according to claim 13, wherein the automatic control algorithm comprises a neural network and/or training is performed as, in particular deep, reinforcement learning.

## Patentansprüche

1. Reparatursystem (1) zum Durchführen von mindestens einer Reparaturaufgabe in mindestens einer Windturbine (2), insbesondere der Gondel (5), wobei das Reparatursystem (1) eine steuerbare robotische Reparaturvorrichtung (15) umfasst, die in der Windturbine (2), insbesondere in der Gondel (5) installiert ist und mindestens einen Umgebungssensor (22) aufweist, wobei das Reparatursystem (1) ferner eine Betätigungsvorrichtung zum entfernten Betätigen der robotischen Reparaturvorrichtung (15) umfasst, wobei die Betätigungsvorrichtung Folgendes umfasst eine Steuervorrichtung (23) und
eine virtuelle Realitätsausrüstung (3), die für mindestens einen menschlichen Servicebenutzer, der entfernt von der Windturbine (2) bereitgestellt ist, eine virtuelle Realitätsumgebung eines Innenraums der Windturbine (2), insbesondere der Gondel (5), bereitstellt, wobei die Steuervorrichtung (23) der Betätigungsvorrichtung zu Folgendem angepasst ist Fernsteuern der robotischen Reparaturvorrichtung (15), insbesondere als ein Avatar, gemäß Benutzereingabebefehlen, die via die virtuelle Realitätsausrüstung (3) bereitgestellt werden, Bestimmen auf Basis von Statusinformationen, die von einer Windturbinensteuerung (12) empfangen werden, und/oder Sensordaten des mindestens einen Umgebungssensors (22) und/oder Empfangen von Reparaturaufgabeninformationen, die eine aktuelle Reparaturaufgabe beschreiben, und
in der virtuellen Realitätsumgebung Markieren von Objekten im Innenraum, insbesondere in der Gondel (5), die gemäß den Reparaturaufgabeninformationen für die Reparaturaufgabe relevant sind, und/oder Ausblenden von Objekten, die gemäß den Reparaturaufgabeninformationen für die Reparaturaufgabe nicht relevant sind.

2. Reparatursystem (1) nach Anspruch 1,
wobei die virtuelle Realitätsausrüstung (3) eine virtuelle Realitätsbrille (25) umfasst und
wobei die Steuervorrichtung (23) angepasst ist, die virtuelle Realitätsumgebung für die virtuelle Realitätsbrille (25) auf Basis von Sensordaten von dem mindestens einen Sensor der robotischen Reparaturvorrichtung (15) zu erzeugen, und/oder wobei die virtuelle Realitätsausrüstung (3) ferner virtuelle Realitätshandschuhe (26) umfasst und
wobei die Steuervorrichtung (23) angepasst ist, aus Bewegungsdaten der virtuellen Realitätshandschuhe (26) mindestens einen Benutzereingabebefehl abzuleiten.

3. Reparatursystem (1) nach einem der vorhergehenden Ansprüche, wobei die Steuervorrichtung (23) angepasst ist, gemäß den Reparaturaufgabeninformationen und/oder den Statusinformationen virtuelle Hilfe- und/oder Statusinformationsobjekte in die virtuelle Realitätsumgebung einzubinden.

4. Reparatursystem (1) nach einem der vorhergehenden Ansprüche, wobei die robotische Reparaturvorrichtung (15) mindestens einen Manipulator (16) umfasst, der mindestens ein Werkzeug umfasst und/oder angepasst ist, ein im Innenraum, insbesondere in der Gondel (5), bereitgestelltes Werkzeug zu handhaben.

5. Reparatursystem (1) nach Anspruch 4, wobei der mindestens eine Umgebungssensor (22) und der mindestens eine Manipulator (16) in einer Beziehung zwischen dem menschlichen Auge und dem Arm angeordnet sind.

6. Reparatursystem (1) nach Anspruch 4 oder 5, wobei die robotische Reparaturvorrichtung (15) ferner eine Positionierungsanordnung (17) zum Positionieren des Manipulators (16) umfasst.

7. Reparatursystem (1) nach Anspruch 6, wobei die Positionierungsanordnung (17) eine erste Führungsvorrichtung (18), insbesondere eine Führungsschiene (29), und eine zweite Führungsvorrichtung (19), insbesondere eine Führungsschiene (29), umfasst, wobei die zweite Führungsvorrichtung (19) in der ersten Führungsvorrichtung (18) in eine erste Richtung (30) geführt wird und der Manipulator (16) in der zweiten Führungsvorrichtung (19) in eine zweite Richtung (31) geführt wird, die insbesondere senkrecht zur ersten Richtung (30) verläuft.

8. Reparatursystem (1) nach Anspruch 7, wobei die erste Richtung (30) einer Längsrichtung der Gondel (5) und/oder der Richtung der Rotationsachse der Windturbinenrotationsanordnung (6) entspricht und/oder die erste Führungsvorrichtung (19) an einer Decke (20) der Gondel (5) montiert ist.

9. Reparatursystem (1) nach einem der Ansprüche 6 bis 8, wobei der Positionierungsbereich der Positionierungsanordnung (17), insbesondere der ersten Führungsvorrichtung (18), ein Rotorlager (9) und/oder ein Getriebe (10) und/oder eine Stromerzeugungsanordnung (11), insbesondere einen Generator (13), in der Gondel (5) mindestens teilweise überspannt.

10. Reparatursystem (1) nach einem der vorhergehenden Ansprüche, das die Gondel (5) der Windturbine (2) umfasst, wobei die steuerbare robotische Reparaturvorrichtung (15) in der Gondel (5) installiert ist.

11. Verfahren zum Durchführen von mindestens einer Reparaturaufgabe in mindestens einer Windturbine (2), insbesondere der Gondel (5), unter Verwendung eines Reparatursystems (1) nach einem der vorhergehenden Ansprüche, wobei das Reparatursystem (1) eine steuerbare robotische Reparaturvorrichtung (15), die in der Windturbine, insbesondere der Gondel (5), installiert ist, eine Betätigungsvorrichtung zum entfernten Betätigen der robotischen Reparaturvorrichtung (15), die eine Steuervorrichtung (23) umfasst, sowie eine virtuelle Realitätsausrüstung (3) umfasst, die mindestens einem menschlichen Servicebenutzer, der entfernt von der Windturbine (2) bereitgestellt ist, eine virtuelle Realitätsumgebung des Innenraums der Windturbine, insbesondere der Gondel (5), bereitstellt,
wobei die robotische Reparaturvorrichtung (15) gemäß Benutzereingabebefehlen, die via die virtuelle Realitätsausrüstung (3) bereitgestellt werden, ferngesteuert wird,
wobei Reparaturaufgabeninformationen, die eine aktuelle Reparaturaufgabe beschreiben, auf Basis von Statusinformationen, die von einer Windturbinensteuerung (12) empfangen werden, und/oder Sensordaten von mindestens einem Umgebungssensor (22) der robotischen Reparaturvorrichtung (15) bestimmt und/oder empfangen werden und
wobei in der virtuellen Realitätsumgebung Objekte eines Innenraums, insbesondere der Gondel (5), die gemäß den Reparaturaufgabeninformationen für die Reparaturaufgabe relevant sind, markiert werden und/oder Objekte, die gemäß den Reparaturaufgabeninformationen für die Reparaturaufgabe nicht relevant sind, ausgeblendet werden.

12. Verfahren nach Anspruch 11, wobei Protokollinformationen, die jede Reparaturaufgabe beschreiben, gespeichert werden, insbesondere in der Steuervorrichtung (23), wobei die Protokollinformationen insbesondere eine reparierte Komponente der Windturbine (2), verwendete Werkzeuge (27) und/oder Verarbeitungsschritte zum Durchführen der Reparatur gemäß Benutzereingabebefehlen umfassen.

13. Verfahren nach Anspruch 12, wobei gespeicherte Protokollinformationen für mehrere Reparaturaufgaben verwendet werden, um einen automatischen Steueralgorithmus mit künstlicher Intelligenz zu trainieren, wobei der trainierte automatische Steueralgorithmus für eine vollautomatische Durchführung von mindestens einer künftigen Reparaturaufgabe durch Steuern der robotischen Reparaturvorrichtung (15), insbesondere aus der Ferne, verwendet wird.

14. Verfahren nach Anspruch 13, wobei der automatische Steueralgorithmus ein neuronales Netzwerk umfasst und/oder ein Training als, insbesondere tiefes, Verstärkungslernen durchgeführt wird.

## Revendications

1. Système de réparation (1) pour réaliser au moins une tâche de réparation dans au moins une éolienne (2), en particulier la nacelle (5), le système de réparation (1) comprenant un dispositif de réparation robotique contrôlable (15) installé dans l'éolienne (2), notamment dans la nacelle (5), et comportant au moins un capteur d'environnement (22), le système de réparation (1) comprenant en outre un dispositif de fonctionnement pour faire fonctionner à distance le dispositif de réparation robotique (15), le dispositif de fonctionnement comprenant
un dispositif de commande (23), et
un équipement de réalité virtuelle (3) fournissant un environnement de réalité virtuelle d'un intérieur de l'éolienne (2), en particulier de la nacelle (5), pour au moins un utilisateur de service humain prévu à distance de l'éolienne (2), dans lequel le dispositif de commande (23) du dispositif de fonctionnement est adapté
pour commander à distance le dispositif de réparation robotique (15), en particulier sous la forme d'un avatar, en fonction des commandes d'entrée de l'utilisateur fournies via l'équipement de réalité virtuelle (3), pour déterminer, sur la base des informations sur l'état reçues d'un contrôleur d'éolienne (12) et/ou des données de capteur du au moins un capteur d'environnement (22), et/ou pour recevoir des informations sur les tâches de réparation décrivant une tâche de réparation en cours, et
pour, dans l'environnement de réalité virtuelle, mettre en évidence des objets de l'intérieur, en particulier de la nacelle (5), pertinents pour la tâche de réparation selon les informations sur les tâches de réparation, et/ou estomper des objets non pertinents pour la tâche de réparation selon les informations sur les tâches de réparation.

2. Système de réparation (1) selon la revendication 1,
dans lequel l'équipement de réalité virtuelle (3) comprend des lunettes de réalité virtuelle (25), et dans lequel le dispositif de commande (23) est adapté pour générer l'environnement de réalité virtuelle pour les lunettes de réalité virtuelle (25) sur la base des données de capteur provenant du au moins un capteur du dispositif de réparation robotique (15), et/ou
dans lequel l'équipement de réalité virtuelle (3) comprend en outre des gants de réalité virtuelle (26), et le dispositif de commande (23) est conçu pour dériver au moins une commande d'entrée de l'utilisateur à partir des données de mouvement des gants de réalité virtuelle (26).

3. Système de réparation (1) selon l'une des revendications précédentes, dans lequel le dispositif de commande (23) est adapté pour inclure des objets d'aide virtuelle et/ou d'informations sur l'état dans l'environnement de réalité virtuelle en fonction des informations sur les tâches de réparation et/ou des informations sur l'état.

4. Système de réparation (1) selon l'une des revendications précédentes, dans lequel le dispositif de réparation robotique (15) comprend au moins un manipulateur (16), comprenant notamment au moins un outil et/ou adapté pour manipuler un outil fourni à l'intérieur, notamment la nacelle (5).

5. Système de réparation (1) selon la revendication 4, dans lequel le au moins un capteur d'environnement (22) et le au moins un manipulateur (16) sont disposés dans une relation humaine œil à bras.

6. Système de réparation (1) selon la revendication 4 ou 5, dans lequel le dispositif de réparation robotique (15) comprend en outre un ensemble de positionnement (17) pour positionner le manipulateur (16).

7. Système de réparation (1) selon la revendication 6, dans lequel l'ensemble de positionnement (17) comprend un premier dispositif de guidage (18), en particulier un rail de guidage (29), et un deuxième dispositif de guidage (19), en particulier un rail de guidage (29), le deuxième dispositif de guidage (19) étant guidé dans le premier dispositif de guidage (18) dans une première direction (30) et le manipulateur (16) étant guidé dans le deuxième dispositif de guidage (19) dans une deuxième direction (31), notamment perpendiculaire à la première direction (30).

8. Système de réparation (1) selon la revendication 7, dans lequel la première direction (30) correspond à une direction longitudinale de la nacelle (5) et/ou la direction de l'axe de rotation de l'ensemble rotatif de l'éolienne (6), et/ou le premier dispositif de guidage (19) est monté sur un plafond (20) de la nacelle (5).

9. Système de réparation (1) selon l'une quelconque des revendications 6 à 8, dans lequel la plage de positionnement de l'ensemble de positionnement (17), en particulier du premier dispositif de guidage (18), s'étend au moins en partie sur un palier de rotor (9) et/ou une boîte de vitesses (10) et/ou un ensemble de production d'électricité (11), en particulier un générateur (13), dans la nacelle (5).

10. Système de réparation (1) selon l'une des revendications précédentes, comprenant la nacelle (5) de l'éolienne (2), dans lequel le dispositif de réparation robotique contrôlable (15) est installé dans la nacelle (5).

11. Procédé de réalisation d'au moins une tâche de réparation dans au moins une éolienne (2), en particulier la nacelle (5), à l'aide d'un système de réparation (1) selon l'une des revendications précédentes, le système de réparation (1) comprenant un dispositif de réparation robotique contrôlable (15) installé dans l'éolienne, notamment la nacelle (5), un dispositif de fonctionnement pour faire fonctionner à distance le dispositif de réparation robotique (15), qui comprend un dispositif de commande (23) et un équipement de réalité virtuelle (3) fournissant un environnement de réalité virtuelle de l'intérieur de l'éolienne, notamment de la nacelle (5), pour au moins un utilisateur de service humain prévu à distance de l'éolienne (2),
dans lequel le dispositif de réparation robotique (15) est commandé à distance en fonction des commandes d'entrée de l'utilisateur fournies via l'équipement de réalité virtuelle (3),
dans lequel des informations sur les tâches de réparation décrivant une tâche de réparation en cours sont déterminées sur la base des informations sur l'état reçues d'un contrôleur d'éolienne (12) et/ou des données de capteur d'au moins un capteur d'environnement (22) du dispositif de réparation robotique (15) et/ou reçues, et
dans lequel, dans l'environnement de réalité virtuelle, des objets d'un intérieur, notamment de la nacelle (5), pertinents pour la tâche de réparation selon les informations sur les tâches de réparation, sont mis en évidence et/ou des objets non pertinents pour la tâche de réparation selon les informations sur les tâches de réparation sont estompés.

12. Procédé selon la revendication 11, dans lequel des informations de protocole décrivant chaque tâche de réparation sont stockées, notamment dans le dispositif de commande (23), les informations de protocole comprenant notamment un composant réparé de l'éolienne (2), des outils utilisés (27) et/ou des étapes de traitement pour effectuer la réparation selon des commandes d'entrée de l'utilisateur.

13. Procédé selon la revendication 12, dans lequel des informations de protocole stockées pour plusieurs tâches de réparation sont utilisées pour entraîner un algorithme de commande automatique d'intelligence artificielle, l'algorithme de commande automatique entraîné étant utilisé pour la réalisation entièrement automatique d'au moins une tâche de réparation future par la commande, notamment à distance, du dispositif de réparation robotique (15).

14. Procédé selon la revendication 13, dans lequel l'algorithme de commande automatique comprend un réseau neuronal et/ou un apprentissage est effectué sous forme d'apprentissage par renforcement, notamment profond.
